# EUROPÄISCHE PATENTSCHRIFT

(11) **EP 1 644 103 B1**
(45) Veröffentlichungstag und Bekanntmachung des Hinweises auf die Patenterteilung: **17.02.2010**
(21) Anmeldenummer: 04737386.5
(22) Anmeldetag: 14.07.2004
(51) Int. Cl.: B01D 53/94, B01D 53/86, F01N 3/20, H01M 8/06

(54) **VERFAHREN ZUR KATALYTISCHEN NOX- REDUKTION IN ABGASEN EINER WÄRMEKRAFTMASCHINE UND VORRICHTUNG HIERZU**
METHOD FOR THE CATALYTIC REDUCTION OF NOx IN EXHAUST GASES OF A THERMAL ENGINE AND A DEVICE FOR CARRYING OUT SAID METHOD
PROCEDE ET DISPOSITIF POUR LA REDUCTION CATALYTIQUE DES NOx CONTENUS DANS LES GAZ D'ECHAPPEMENT D'UN MOTEUR THERMIQUE

(30) Priorität: 14.07.2003 AT 10782003
(43) Veröffentlichungstag der Anmeldung: 12.04.2006
(73) Patentinhaber: Alpps Fuel Cell Systems GmbH, 8051 Graz (AT)
(72) Erfinder: WANCURA, Herbert, A-8055 Seiersberg (AT)
(86) Internationale Anmeldenummer: PCT/AT2004/000256
(87) Internationale Veröffentlichungsnummer: WO 2005/005027

(56) Entgegenhaltungen:
- EP-A- 0 537 968
- EP-A- 1 030 395
- WO-A-00/76637
- DE-A- 10 135 646
- DE-A- 19 810 275
- US-A- 5 976 475
- DATABASE WPI Section Ch, Week 199834 Derwent Publications Ltd., London, GB; Class E36, AN 1998-394544 XP002298233 & JP 10 159551 A (ISHIKAWAJIMA HARIMA HEAVY IND) 16. Juni 1998 (1998-06-16)

## Beschreibung

Die Erfindung betrifft ein Verfahren zur katalytischen NOₓ-Reduktion in sauerstoffhaltigen Abgasen einer Wärmekraftmaschine in einem oder mehreren Reduktionskatalysatoren, wobei Kohlenwasserstoffe des Kraftstoffs der Wärmekraftmaschine eingesetzt werden, sowie eine Vorrichtung hierzu.

Die weltweit zunehmende Industrialisierung und der ständig steigende Kfz- und Flugzeug-Bestand belasten die Atmosphäre in immer stärkerem Ausmaß. Besondere Bedeutung kommt hierbei den bei der Verbrennung von fossilen Brennstoffen entstehenden Stickoxiden zu, die maßgeblich von instationär betriebenen Motoren stammen. Sie sind für die Bildung von bodennahem Ozon und von saurem Regen verantwortlich und müssen drastisch reduziert werden.

Motortechnische Maßnahmen (z.B. Abgasrückführung, Common-Rail-Einspritzung), die bereits während der Verbrennung des Kraftstoff/Luft-Gemisches die Entstehung von Schadstoffen unterdrücken, können die von der Europäischen Union im Euro 4 und 5 festgelegten Emissions-Höchstwerte bei weitem nicht realisieren. Und da der 3-Wege-Katalysator nur bei einer Luftzahl λ von nahe eins optimal funktioniert, müssen für die sauerstoffreichen Abgase (λ»1) von Diesel- und Mager-Otto-Motoren alternative Techniken für nachgeschaltete Prozesse gefunden werden.

Ein bewährtes Verfahren zur Senkung des NOₓ-Ausstoßes in sauerstoffreichen Abgasen ist das SCR-Verfahren, welches seit Mitte der 70er Jahre in der Kraftwerkstechnik Anwendung findet. Bei der klassischen Variante wird Ammoniak selektiv, d.h. in stöchiometrischem Verhältnis als Reduktionsmittel eingesetzt. Unter Mitwirkung eines geeigneten Katalysators (wie Titandioxid-getragene Vanadat/Wolframat-Katalysatoren oder Zeolithe) werden die Stickoxide bei einer Abgastemperatur von etwa 250 bis 500 °C zu Stickstoff und Wasser umgesetzt.

Eine besondere Ausführung für den Einsatz mit Gasturbinen ist in der DE 198 10 275 beschrieben, wobei hier das extern und getrennt gespeicherte Reduktionsmittel, vorzugsweise der für SCR übliche Ammoniak oder Harnstoff mit dem Kühlmittel und einem zusätzlichen Additiv im Bereich der Turbinen eingedüst wird.

Eine Applikation auf den Kraftfahrzeugsektor - und auch Flugzeugsektor - ist erschwert, da unter instationären Bedingungen eine Reihe von Problemen auftreten, die im stationären Betrieb irrelevant sind. Ein Hauptproblem für den Einsatz in Kraftfahrzeugen liegt darin, dass ein separater Reduktionsmitteltank mitgeführt werden muss. Mögliche Leckagen an Tank und Leitungssystem sind aufgrund der Toxizität des Ammoniaks als äußerst bedenklich einzustufen. Zur Zeit konzentrieren sich die F&E-Aktivitäten auf die Verwendung von NH₃-abspaltenden Substanzen; zu nennen sind hier Harnstoff, (NH₂)2C0 und Ammoniumcarbamat, NH₂CO₂NH₄, die als wässrige Lösung oder in fester Form mitgeführt und die Ammoniak über Thermohydrolyse bzw. Thermolyse im Bedarfsfall freisetzen. Die Verwendung von Ammoniumcarbamat ist vergleichsweise einfacher und wird etwa in der WO-A - 96/06674 beschrieben. Das Problem der homogenen Verteilung und Dosierung, sowie die vollständige Zersetzung von Harnstoff im Abgas ist ebenso bereits gelöst; beschrieben wird eine diesbezügliche Erfindung etwa in der DE 199 13 462 oder zuvor in der EP 0 487 886 und der EP 0 555 746.

SCR-Verfahren werden aber auch mit stickstofffreien Reduktionsmitteln erprobt: Alternativ-SCR- bzw. HC-SCR-Verfahren. Als Reduktionsmittel werden hier u.a. Kohlenwasserstoffe eingesetzt, die dem Treibstofftank entnommen und mittels eines Gasstroms einem Crackkatalysator zugeführt werden. Der Brennstoff wird in reaktive Kohlenwasserstoffe gespalten, die dem Motorabgas eingespeist und an edelmetallhaltigen Katalysatoren mit den Stickstoffoxiden umgesetzt werden:

NO + "CH₂" + O₂ ↔ ½ N₂ + CO₂ + H₂O.

Problematisch ist hier allerdings, dass zahlreiche Nebenreaktionen auftreten, wobei auch gemäß

2 NO+'CH₂'+O₂ ↔ N₂O + CO₂ + H₂O

die Bildung von schädlichem Lachgas in höherem Ausmaß möglich ist (Th. Wahl: Katalysierte NOₓ Entfernung mittels organischer Reduktionsmittel, Dissertation Universität Karlsruhe, 1998). In der US-A - 5,921,076 wird ein Mischverfahren offengelegt, in dem die katalytische Reduktion von Stickoxiden mit Edelmetalkatalysatoren bei niedrigen Temperaturen durch die Zugabe von Wasserstoff gestützt wird. Gemäß dieser Offenlegung wird dabei aber Wasserstoff entweder getrennt gespeichert oder durch thermisches oder katalytisches Cracken erzeugt. Diese Erweiterung verbessert die Niedertemperaturansprungfunktion der Stickoxidumsetzung, behält jedoch auf Grund der des Mischbetriebes und der in einigen Betriebsstufen ausschließlich als HC-SCR ablaufenden Reaktion das hohe Lachgasbildungsrisiko bei. Eine mit einem katalytischen Reformer vergleichbar exakte Steuerung der Zusammensetzung des Reduktionsmittelstroms, wie sie zur Erzielung hoher Umsetzungsraten über den gesamten Betriebsbereich der Wärmekraftmaschine erforderlich ist, ist mit dem in der US5921076 dargestellten Verfahren der Wasserstofferzeugung ohne geeignete Sensorik wie Wasserstoffkonzentrationsmessung, nicht möglich. Wahl stellt außerdem die Unwirtschaftlichkeit des HC-SCR Verfahrens in den Vordergrund, welches zur Reduktion eines Äquivalents NOₓ die etwa 15-20 fache Menge an Kohlenwasserstoffen erfordert.

Als sehr effektiv hat sich der Umsatz der Stickstoffoxide mit Methan erwiesen (M. Jahn, Katalytische Stickoxidreduktion mit Methan, Diss., Techn. Univ. Berlin, 1999). CH₄ vermag alles NOₓ bei Temperaturen von 300 bis 500 °C und Verweilzeiten im Reaktor von b = 10.000 bis 100.000 l/h vollständig in N₂, CO₂ und H₂O zu verwandeln. Besonders wichtig ist der Zwischenschritt der Oxidation von NO zu NO₂, denn erst das wesentlich reaktivere NO₂ kann CH₄ zu N₂ umsetzen. Als Katalysator für hohe Konvertierungsraten eignen sich jedoch lediglich Zeolithe, weshalb man besonders darauf achten muss, dass ein Wasserdampfanteil von 1,5 % nicht überschritten wird, da es sonst zu einer Deaktivierung der aktiven Katalysatoroberfläche kommt. Dies reduziert die alleinige Anwendbarkeit im Bereich von typischen Verbrennungskraftmaschinen, da hier die ideale Verbrennung bereits Wassergehalte von ca. 6 % (Gewicht) im Abgas erzeugt.

Der Einsatz von Wasserstoff zur Reduzierung der Stickoxide im Abgas von stationären Quellen oder auch von mobilen Anwendungen wird ebenso bereits seit einigen Jahren erforscht. Experimentelle Untersuchungen, die in einer Dissertation zu diesem Thema vorgenommen wurden, haben erbracht, dass Stickstoffoxide eines sauerstoffhaltigen Abgases mit H₂ im Wabenrohrreaktor, der zur Reinigung der Abgase in Kfz eingesetzt wird, zu reduzieren sind (A. Rogowski, Katalytische NO-Reduktion mit Wasserstoff in sauerstoffhaltigen Abgasen im Wabenrohrkatalysator, Dissertation, Techn. Univ. Berlin, 1992). Die Untersuchungen wurden ebenfalls unter den für Kraftfahrzeugen üblichen technischen Betriebsbedingungen durchgeführt (T = 400 - 500 °C, Raumgeschwindigkeiten bzw. Verweilzeiten von b = 10.000 l/h bis b = 100.000 l/h). Zwei Reaktionen fanden an der Katalysatoroberfläche statt:

Reduktion: 2 NO + 2 H₂ → N₂ + 2 H₂O

Oxidation: 2 H₂ + O₂ → 2 H₂O.

Die NO-Reduzierung erfolgte sowohl im Falle der gezündeten als auch im Falle der gelöschten Knallgasreaktion. Eine Bildung von Nebenprodukten, wie sie bei der HC-SCR gefunden wurde, also z.B. die Formierung von Lachgas oder Salpetersäure, konnte dabei nicht beobachtet werden.

B. Frank et al beschreiben in Applied Catalysis B: Environmental 19 ,p.45-47, Elsevier Science BV, 1998 die Reduktion von Stickoxiden durch Wasserstoff und Magerbetriebszuständen an einem Pt-Mo-Co/α-Al₂O₃ Katalysator. In einem Temperaturfenster von 140-160 °C wird dabei ein Konvertierungsrate von ca.40 bis 80 % festgestellt, wobei der Sauerstoffgehalt innerhalb eines bestimmten Fensters eine fördernde Rolle für die NO/H₂ Reaktion aufweist.

Gemäß der EP 0 881 367 wird eine Variante zur Überwachung der Katalysatorfunktionalität beschrieben. Bei diesem Verfahren wird nach dem Katalysator, der ein DeNOₓ-Katalysator ist, ein Kohlenwasserstoff-Sensor (HC-Sensor) angebracht. Der geschlossene Regelkreis für diese Überwachung beinhaltet den HC-Sensor als Istwertsensor, die Dosiersteuereinheit als Dosierregler, die Kraftstoffdosiervorrichtung als Stellglied und der DeNOₓ-Katalysator als Regelstrecke. Diese Anordnung des Regelkreises ermöglicht eine genaue und effektive Zudosierung des Luft-Kraftstoff-Gemisches.

In einem weiteren Dokument, der DE 197 55 600, wird eine Steuerung des Kraftstoff/Luftverhältnisses beim Betrieb eines Verbrennungsmotors mit einem Katalysator und einem im Strömungsrichtung hinter dem Katalysator angeordneten Abgassonde beschreiben, dass abwechselnd ein magerer und ein fetter Berieb des Verbrennungsmotor gesteuert wird, wobei der Grad der Anfettung und/oder die Länge der Fettphasen abhängig vom Verhalten des Signals des genannten Abgassensors in einer vorhergehenden Fettphase geändert werden. Dabei wird der Motor im zeitlichen Mittel mit magerem Gemisch betrieben.

Wenn die Abgassonde ein Zuviel an Reduktionsmittel in einer Fettphase anzeigt, wird die Menge des zuzuführenden Reduktionsmittels für eine nächste Fettphase verringert. Bei ausreichender Verringerung wird die Abgassonde am Ende der nächsten Fettphase kein Zuviel mehr anzeigen. Dann wird die Menge des in folgenden Fettphasen zuzuführende Reduktionsmittels sukzessive solange erhöht, bis erneut eine Reaktion des hinter dem Katalysator angeordneten Abgassensors auftritt.

Die DE 44 41 261 beschreibt ein Verfahren zur Abgasnachbehandlung. Die Dosiereinrichtung besteht aus einer kontinuierlich fördernden mit von der Steuerungseinrichtung gesteuerten variablen Drehzahl angetriebenen Verdrängerpumpe. Diese Verdrängerpumpe weist einen in einem Zylinder gelagerten, von einem elektrischen Motor angetriebenen zylindrischen Rotationskörper auf, der auf seinen Mantelflächen wenigstens einen Gewindegang aufweist, der von einer Reduktionsmitteleinlassöffnung in den Zylinder führt. Die Reduktionsmittelauslassöffnung ist mit einer Reduktionsmitteleinbringstelle am Eintritt des Katalysators verbunden.

Die Erfindung, die in der DE 103 00 555 beschrieben wird, betrifft eine Verschlechterungsermittlungseinrichtung und ein Verschlechterungsermittlungsverfahren für eine Verbrennungsmotorabgassteuerungsvorrichtung. Es ist dabei die Aufgabe gestellt, eine höchst genaue Ermittlung im Hinblick auf die Verschlechterung einer NOₓ-Steuerfähigkeit eines Katalysators unabhängig von der Genauigkeit der Erfassung einer Abgaskonzentration zu gestatten.

Das heißt, dass bei dieser Vorrichtung und bei diesem Verfahren auf die folgende Weise ermittelt wird, ob sich der Katalysator verschlechtert hat. Gleichzeitig mit der Erfassung, dass der Verbrennungsmotor im Begriff ist anzuhalten, wird Kraftstoff zu der Abgassteuerungsvorrichtung hinzugegeben, die mit dem Katalysator versehen ist. Aufgrund des hinzugebenden Kraftstoffs wird die Katalysatortemperatur, dass heißt die Abgassteuerungsvorrichtungstemperatur, angehoben, um den Katalysator zu aktivieren. Eine Zeit, die abläuft, bis sich die Katalysatortemperatur auf eine vorbestimmte Temperatur verringert, bei der die Aktivierung des Katalysators anhält, wird gemessen. Die Zeit von der Zugabe des Kraftstoffs, bis die vorbestimmte Temperatur erreicht ist, wird mit einer Zeit verglichen, die von der Zugabe des Kraftstoffes zu einem unverschlechterten Katalysator auf eine gleiche Weise abläuft, bis die Katalysatortemperatur sich auf eine vorbestimmte Temperatur nach dem Ansteigen aufgrund der Zugabe des Kraftstoffs verringert. Auf der Grundlage des Vergleichergebnisses wird ermittelt, ob sich der Katalysator verschlechtert hat.

Es ist weiters bekannt (DE 44 41 261 A1, EP 0 881 367 A), zur Verbesserung der Leistung eines Katalysators, der in einer Abgasleitung einer Brennkraftmaschine vorgesehen ist, Reduktionsmittel in Form von Kraftstoff vorzusehen, der dem Katalysator zugeführt wird und vom Kraftstoff der Brennkraftmaschine abgezweigt wird. Hiermit läßt sich allenfalls die Leistung eines Katalysators verbessern, jedoch nicht eine effektive NOₓ-Senkung in einem Abgas einer Wärmekraftmaschine erzielen.

Die WO 0076637A offenbart ein Verfahren zur katalytischen NOₓ -Reduktion in sauerstoffhaltigen Abgasen einer Wärmekraftmaschine in einem DeNOₓ Katalysator. Ein Reduktionsmittel zur Verwendung in einem DeNOₓ Katalysator wird aus dem Kraftstoff der Wärmekraftmaschine in einem katalytischen Reformer hergestellt.

Die DE 101 25 646 A zeigt ein Verfahren zur Reduzierung von Stickoxiden im Abgas einer Brennkraftmaschine als bekannt, wobei die Stickoxide in einem in einer Abgasleitung der Brennkraftmaschine angeordneten DeNOₓ Katalysator mit Hilfe eines wasserstoffhaltigen Gases reduziert werden. Das wasserstoffhaltige Gas wird aus dem Kraftstoff der Brennkraftmaschine in einem katalytischen Reformer hergestellt.

Weiters geht aus diesem Dokument eine Vorrichtung zur Reduzierung von Stickoxiden im Abgas einer Brennkraftmaschine als bekannt hervor, die folgendes enthält:
- einen in der Abgasleitung der Wärmekraftmaschine vorgesehenen DeNOₓ Katalysator, in den eine Reduktionsmittelzuleitung mündet
- einen Reformer, in den eine Kraftstoff aus dem Krafttank der Brennkraftmaschine zuführende Kraftstoffleitung mündet, wobei die Reduktionsmittelzuleitung vom Reformer ausgeht.

Die Erfindung bezweckt die Vermeidung der oben geschilderten Nachteile und Schwierigkeiten und stellt sich die Aufgabe, ein Verfahren und eine Vorrichtung zur Durchführung des Verfahrens zu schaffen, welche in effektiver Weise eine effiziente Senkung des NOₓ-Ausstoßes unter Vermeidung der Entstehung giftiger oder zumindest bedenklicher Stoffe bzw. Gase ermöglichen. Zudem sollen das Verfahren bzw. die Vorrichtung leicht steuerbar, d.h. an unterschiedliche Betriebsbedingungen der Wärmekraftmaschine anpaßbar sein, so dass die Erfindung sowohl für Wärmekraftmaschinen im stationären Bereich als auch für Wärmekraftmaschinen im KfZ-Bereich bzw. im Flugzeug-Bereich einsetzbar sind.

Diese Aufgabe wird bei einem Verfahren der eingangs beschriebenen Art erfindungsgemäß durch die Verwendung eines in einer Brennstoffzelle kontrolliert aus dem Kraftstoff der Wärmekraftmaschine hergestellten Gasgemisches als Reduktionsmittel für den bzw. die Reduktionskatalysator(en) gelöst.

Erfindungsgemäß werden die Stickoxide in einem nachgeschalteten Prozess in einem katalytischen Verfahren mittels eines als Reduktionsmittel genutzten Gasgemisches reduziert, welches als Anodenabgas einer mit Kohlenwasserstoffen direkt oder indirekt betriebenen Brennstoffzelle anfällt und in Gasstromrichtung vor dem oder in dem Katalysator eingebracht wird. Die Generierung aus dem Kraftstoff erspart den Einsatz getrennter Reduktionsmittel, wie beispielsweise Ammoniak oder Harnstoff. Erfindungsgemäß kann das Reformat, bestehend aus H₂, CO, CH₄ und N₂ direkt als Reduktionsmittel im Katalysator eingesetzt werden. Da keine reaktiven Kohlenwasserstoffe wie bei thermischen oder katalytischen Crackverfahren erzeugt werden, wird der Ablauf von Nebenreaktionen und die Bildung von Nebenprodukten vermieden. Bei Nutzung des Anodenabgases der Brennstoffzellen wird insgesamt auch ein höherer Wirkungsgrad erzielt.

Vorteilhafte Varianten sind in den Unteransprüchen 2 bis 17 gekennzeichnet.

Eine Vorrichtung zur Durchführung des Verfahrens mit mindestens einem in einer Abgasleitung einer Wärmekraftmaschine vorgesehenen Reduktionskatalysator, in den eine Reduktionsmittelzuleitung mündet, ist **dadurch gekennzeichnet, dass** eine Brennstoffzelle vorgesehen ist, in die eine Kraftstoff aus einem Kraftstofftank der Wärmekraftmaschine zuführende Kraftstoffleitung mündet und von welcher Brennstoffzelle die Reduktionsmittelzuleitung ausgeht.

Vorteilhafte Ausführungsformen sind in den Unteransprüchen 19 bis 29 gekennzeichnet.

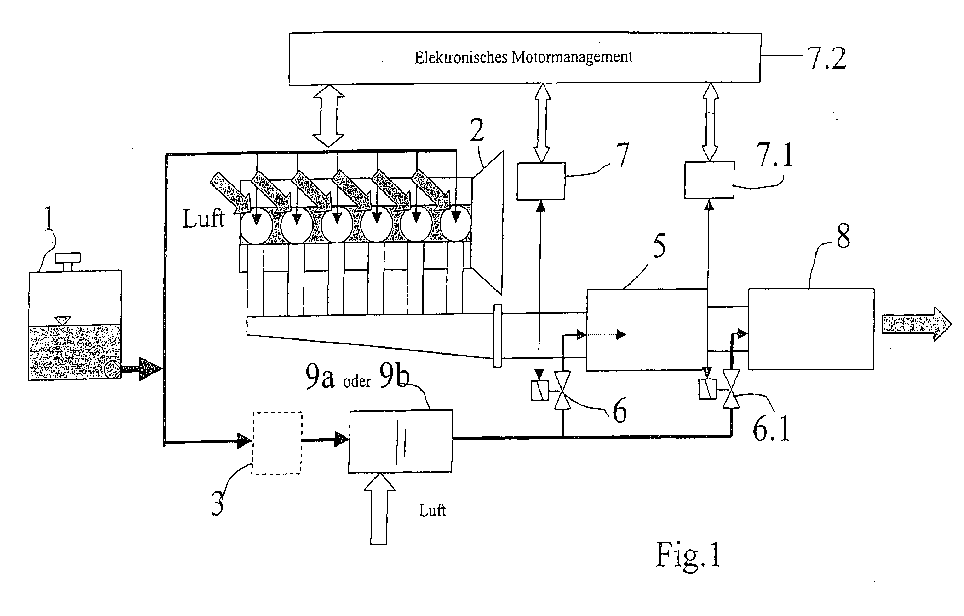

Die Erfindung ist nachfolgend an einigen in der Zeichnung in den Fig. 1 bis 3 dargestellten Ausführungsbeispielen näher erläutert.

In einem Kraftstofftank 1 für eine als Verbrennungskraftmaschine 2 ausgebildete Wärmekraftmaschine befindet sich ein Kohlenwasserstoffgemisch, das zum einen in der Verbrennungskraftmaschine 2 zum Einsatz kommt und zum anderen nach einer entsprechenden Vorbehandlung für die "on-board" Herstellung eines Reformats als Abgas-Reduktionsmittel für einen Katalysator 5 (Fig. 1 bis 3) und als Brennstoff einer direkt betriebenen Brennstoffzelle 9a, 9b, beispielsweise in Form einer Nebenaggregate-Energieversorgungseinheit (APU=Auxiliary Power Unit), dient.

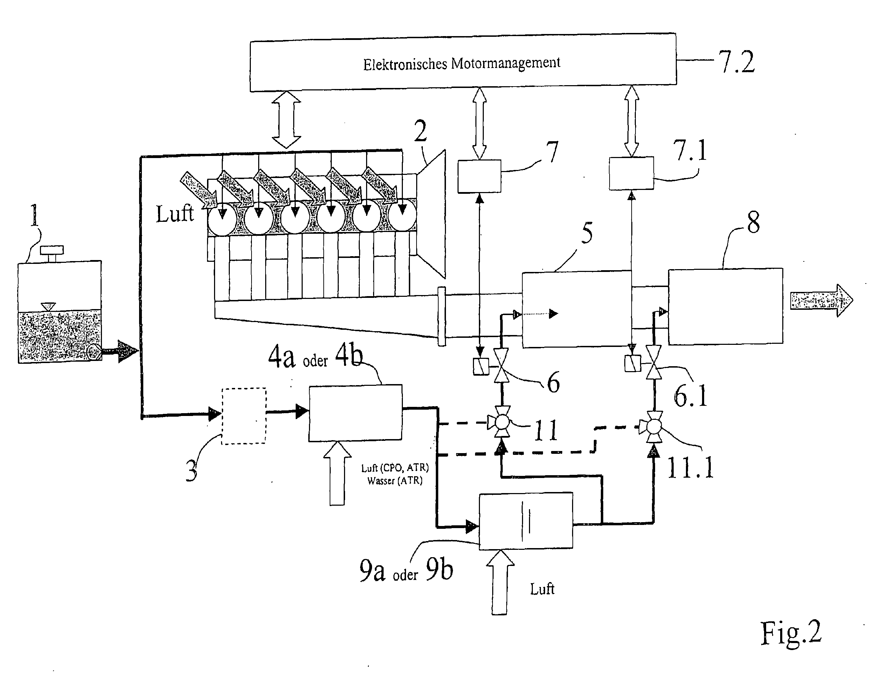

Der Kraftstoff aus dem Kraftstofftank 1 wird gemäß Fig. 2 in einem Reformer 4a, 4b, mit dem lange kettenförmige Kohlenwasserstoffe in eine Mixtur aus CO und H-reichen Gasen konvertiert werden können, umgesetzt. Die Reformeranlage weist beispielsweise zwei Reaktionskammern auf. In der ersten Kammer wird der flüssige Brennstoff mit Verbrennungsluft gemischt und verdampft. Die homogene Mischung aus Brennstoff/Luft wird dann in der zweiten Reaktionskammer direkt (katalytisch gestützte partielle Oxidation, 4a) und/oder unter Zugabe von Wasser (ATR= Auto-Thermal Reactor, 4b) katalytisch reformiert. Da nicht O₂, sondern Luft für die Oxidation der Kohlenwasserstoffe eingesetzt wird, setzt sich das resultierende Reformat-Gasgemisch aus H₂, CO und in geringem Ausmaß auch aus CH₄ sowie N₂ zusammen.

Die Zuführung erfolgt über ein Dosierventil 6, das von einem Dosierregelsystem 7, das mit dem elektronischen Motormanagement 7.1 verknüpft ist, gesteuert wird. Eine gegebenenfalls in der Kraftstoffleitung vom Kraftstofftank 1 zum Reformer 4a, 4b vorgesehene Entschwefelungseinrichtung ist mit 3 bezeichnet.

Das Reformat wird direkt in den Katalysator 5 geleitet (Fig. 2), um dort verschiedene Redoxreaktionen mit den NOₓ des Abgases einzugehen, wobei die Steuerung des Reduktionsmittelflusses in allen Ausführungen dem Stand der Technik gemäß durch ein elektronisches Managementsystem in Abhängigkeit von der Stickoxidkonzentration im Abgas durchgeführt wird. Ist eine direkte Erfassung messtechnisch nicht möglich, so wird ebenfalls gemäß dem Stand der Technik über indirekte Parameter, wie Motorbetriebspunkt oder Abgas- bzw. Katalysatortemperatur oder eine Kombination dieser Variablen gesteuert.

Gemäß Fig. 2 wird weiters das Anodenabgas einer mit dem Kraftstoff aus dem Kraftstofftank 1 betriebenen Brennstoffzelle 9a, 9b, beispielsweise einer Festoxid-Brennstoffzelle 9a (SOFC) oder einer Schmelzkarbonat-Brennstoffzelle 9b (MCFC), eingesetzt werden.

Durch die Kombination eines Reformers 4a, 4b mit einer Brennstoffzelle 9a, 9b kann die Zusammensetzung des Reduktionsmittels gezielt beeinflusst werden, in dem ein Teilstrom des Reformates aus dem Reformer 4a, 4b vor der Brennstoffzelle 9a, 9b abgezweigt wird und mittels eines Mischventiles 11.1 mit dem Anodenabgas der selben Brennstoffzelle 9a, 9b so gemischt wird, dass die optimale Ausprägung der Zusammensetzung des dem Niedertemperaturkatalysator 8 zugeführten Reduktionsmittelstroms erreicht wird. Mittels des Mischventiles 11 kann Anodenabgas der Brennstoffzelle 9a, 9b dem Reformat des Reformers 4a, 4b zugemischt und dem Katalysator 5 zugeleitet werden.

Die Zusammensetzung der Reduktionsmittel verändert sich dabei teilweise, da es zu einer unterschiedlichen Umsetzung der einzelnen Komponenten kommt. Da jedoch der Wirkungsgrad der Brennstoffzelle bzw. des Stacks mit abnehmender Kraftstoffausnützung steigt, kann bei entsprechender Nutzung des Anodenabgases ein insgesamt vorteilhafter Wirkungsgrad erreicht werden. In einer besonders vorteilhaften Ausführung kann dabei die von der Brennstoffzelle 9a und/oder 9b erzeugte elektrische Energie zur elektrischen Beheizung der Katalysatoren 5 genutzt werden. Ein dem als Hochtemperaturkatalysator ausgebildeten Katalysator 5 nachgeschalteter Niedrigtemperaturkatalysator 8 wird über ein Dosierventil 6.1 mit Reduktionsmittel versorgt. Die Steuerung des Dosierventiles 6.1 erfolgt über ein mit dem elektronischen Motormanagement gekoppeltes Dosierregelsystem 7.1. Gemäß einer besonderen Ausführung (vgl. Fig. 1) kann die Aufbereitung der Reduktionsmittel durch einen separaten Reformer 4a, 4b entfallen, da die Umsetzung des Kraftstoffs im Wege der Innenreformation in der Brennstoffzelle 9a, 9b stattfindet und das Anodenabgas entsprechend als Reduktionsmittel eingesetzt wird.

### Die Funktion eines Reformers ist folgende:

Der Kraftstoff, der mit Luft in der Verbrennungskraftmaschine 2 verbrannt wird, erzeugt im Falle von Diesel- und Mager-Otto-Motoren bekannterweise Abgase mit den für Kraftfahrzeugen üblichen Schadstoffen und zudem hohen O₂-Gehalt. Die NOₓ dieser Abgase können in einem nachgeschalteten Prozess derart reduziert werden, dass sie zu unbedenklichem N₂ und H₂O führen. Die Abgase werden hierfür in einen ein- oder mehrstufigen Katalysator 5, 8 geleitet und dort mit dem ein Reduktionsmittel beinhaltenden Reformat umgesetzt.

Folgende Teilreaktionen finden im Katalysator 5, 8 unter den für Kraftfahrzeugen üblichen technischen Betriebsbedingungen statt:

2 NO + 2 H₂ → N₂ + 2 H₂O (Gl. 1)

½ O₂ + H₂ → H₂O (Gl. 2)

2 NO + 2 CO → N₂ + 2 CO₂ (Gl. 3)

2 NO + O₂ ↔ 2 NO₂ (Gl. 4)

2 NO₂ + 2 CH₄ + O₂ → N₂ + 2 CO + 4 H₂O (Gl. 5)

CH₄ + 3/2 O₂ → CO + 2 H₂O (Gl. 6)

CO + ½ O₂ → 2 CO₂ (Gl. 7)

Die Reaktionen (Gl. 1) und (Gl. 2) entsprechen den Redoxreaktionen des Wasserstoffs (beschrieben wie oben erwähnt in: A. Rogowski, Katalytische NO-Reduktion mit Wasserstoff in sauerstoffhaltigen Abgasen im Wabenrohrkatalysator, Dissertation, Techn. Univ. Berlin, 1992).

Reaktion (Gl. 3) ist die seit langem bekannte Reduktion von NO mit CO, die eine jener Reaktionen ist, die auch bei der katalytischen Abgasreinigung im Dreiweg-Katalysator ablaufen. Es gilt hier allerdings, dass, wenn das auf den Katalysator treffende Gemisch immer "magerer" an Treibstoff und somit O₂-reicher wird, bevorzugt das CO zu CO₂ oxidiert wird, und für die langsamere NO-Reduktion nicht mehr genug CO übrig bleibt. Im konkreten Fall ist die Oxidation des CO nicht störend, da neben dem CO auch noch andere Reduktionsmittel für die Reduzierung der NOₓ zur Verfügung stehen.

Die Reaktionen (Gl. 4) bis (Gl. 7) sind Teil des Reaktionssystems der Reduzierung mit Methan (M. Jahn, Katalytische Stickoxidreduktion mit Methan, Diss., Techn. Univ. Berlin, 1999).

Das Gasgemisch des Reformers stellt somit eine Kombination aus drei bekannten Reduktionsmitteln dar. Die Möglichkeit des direkten Einsatzes des Gemisches erspart aufwendige Gasreinigungen und zudem sind keine Tanks für eine Zwischenspeicherung notwendig.

Die Nutzung des Reformates als Reduktionsmittel kann in einer Reihe von Katalysator-Anordnungen erfolgen.

Bei einer in Fahrzeuganwendungen üblichen Verbrennungskraftmaschine 2, wird eine Anordnung im Abgasstrang so gewählt werden, dass die optimalen Arbeitstemperaturen der Reaktion sichergestellt sind. Für die SCR-Reaktion mit Wasserstoff ist von einer motornahen Anordnung auszugehen (Fig. 2), für die von B.Frank et al und in US-A- 5,921,076 beschriebene Reduktion an Edelmetallkatalysatoren kann auf Grund der niedrigeren Temperaturen auch eine eher motorferne Anordnung gewählt werden. In einer besonderen Ausführung ist zur Erzielung höchstmöglicher Stickoxid-Konvertierungsraten eine Kombination aus beiden Katalysatorvarianten vorgesehen (Fig. 1 und 2).

In allen Fällen wird eine thermische Integration mit dem Reformat der Brennnstoffzelle 9a, 9b bzw. der Kombination aus Reformer 4a, 4b und der Brennstoffzelle 9a, 9b, welche beide typisch eine Temperaturniveau aufweisen, das signifikant über dem für das Ablaufen der katalytischen Reaktion erforderlichen Niveau des Abgaskatalysators der Hauptmaschine liegt, hinsichtlich des Temperaturmanagements dieses Katalysators von Bedeutung sein.

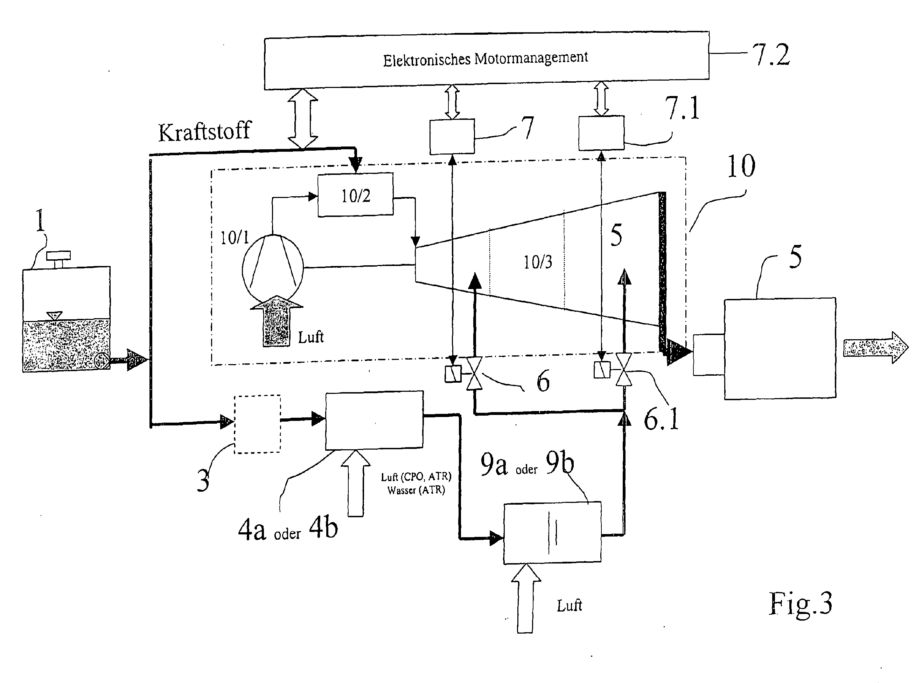

Im Falle von, wie in thermischen Großanlagen üblich, stationär betriebenen Gasturbinen 10 mit Verdichter 10/1, Brennkammer 10/3 und Turbosatz 10/3 (Fig. 3), kann die Einbringung des erfindungsgemäß aus dem Kraftstoff erzeugten Reduktionsmittels analog zu der in DE 198 10 275 beschriebenen Form erfolgen und auch die Anordnung des DeNOₓ-Katalysators im Rauchgasstrom kann in ähnlicher Form ausgeführt sein. Hier ist der erfindungsgemäß erzielte Vorteil im Entfall der notwendigen externen Beistellung des Reduktionsmittels zu sehen, da dieser erheblichen Transportaufwand bewirkt, welcher im Falle des Einsatzes von Ammoniak als Reduktionsmittel als "Gefahrguttransport" zu sehen ist.

Eine besondere erfindungsgemäße Ausführungsform stellt die Anwendung für mobile Gasturbinen dar, wie sie zu Flugzeugantriebszwecken eingesetzt werden. In dieser Anwendung ist der Einsatz von Abgasnachbehandlungstechniken bisher nicht möglich, da die bekannten SCR-Techniken die Mitnahme zusätzlicher Reduktionsmitteltanks erfordern, was in dieser Anwendung erhebliche Applikationsprobleme verursacht. Erfindungsgemäß wird daher das über die Brennstoffzelle oder die Kombination von Reformer und Brennstoffzelle "on-board" erzeugte Reduktionsmittel an passender Stelle in den Turbinenteil, beispielsweise über die Kühlkanäle eingebracht. Die entsprechenden Katalysatorflächen befinden sich dabei entweder auf den nicht bewegten Teilen, wie Leitschaufeln und Gehäuseinnenflächen, oder aber im Falle entsprechend beständiger Katalysatoroberflächen auch an den Turbinenschaufeln selbst. Durch die insgesamt endotherme Reduktion der Stickoxide kann eine zusätzliche Kühlwirkung im Turbosatz bewirkt werden, und gemeinsam mit der Absenkung der Stickoxid-Emissionen so die Grundlage für eine Erhöhung der Turbineneintrittstemperatur und damit des Wirkungsgrades liefern.

Bei Turboprop-Triebwerksausführungen stellt die zusätzliche Anordnung eines im Rauchgasstrom nachgeschalteten Katalysators eine weitere erfindungsgemäße Ausführungsform dar, da hier der Rauchgasmassenstrom nicht zur eigentlichen Fortbewegung benötigt wird.

Die heutigen eingesetzten flüssigen und gasförmigen Kraftstoffe weisen Schwefelgehalte zwischen 10 und 600 mg/kg Kraftstoff (Kerosin für Flugzeugantriebe), wobei für Diesel heute 350 mg/kg Kraftstoff als Grenzwert gelten, wogegen der Grenzwert für Benzine bei 150 mg/kg Kraftstoff liegt. Ein verbindlicher Zeitplan für die Verbreitung von Kraftstoffen mit reduziertem Schwefelgehalt wird von der Europäischen Kommission in ihrer KOM (2001) 241 wie folgt vorgeschlagen: Flächendeckende Versorgung mit "schwefelarmem" Kraftstoff mit maximal 50 Milligramm Schwefel pro Kilogramm Kraftstoffe ab 1.1.2005 sowie mit "schwefelfreiem" Kraftstoff mit maximal 10 Milligramm Schwefel pro Kilogramm Kraftstoff ab 1.1.2009.

Minimale Schwefelgehalte des Kraftstoffs sind von Bedeutung, da einerseits bereits kleinste Mengen an Schwefel als Katalysatorgift wirken und die Lebensdauer des Katalysators erheblich beeinträchtigen können sowie darüber hinaus das Gleichgewicht zwischen exothermen und endothermen Reaktionen in einem Reformer zugunsten der exothermen Reaktion verschieben. Dadurch kann es im Reformer zu lokalen und temporären Temperaturanstiegen kommen, die das Substrat und den Katalysator zerstören können.

In einer besonderen Ausführung der Erfindung ist daher vorgesehen, den für die Umsetzung im Reformer 4a, 4b und der Brennstoffzelle 9a, 9b vorgesehenen Kraftstoff zu entschwefeln. Die Entschwefelungseinrichtung 3 des Kraftstoffes hat jedoch auch positive Auswirkungen auf die Abgaszusammensetzung, und führt insbesondere zu einer Reduktion der Partikelemission. In einer weiteren vorteilhaften Ausführungsform ist es daher möglich, neben dem Kraftstoff für den Reformer 4a, 4b und die Brennstoffzelle 9a, 9b den gesamten Kraftstoff der Wärmekraftmaschine 2 oder wesentliche Teile davon über die Entschwefelungseinrichtung 3 zu leiten.

## Patentansprüche

1. Verfahren zur katalytischen NOₓ-Reduktion in sauerstoffhaltigen Abgasen einer Wärmekraftmaschine (2, 10) in einem oder mehreren Reduktionskatalysatoren (5, 8), wobei Kohlenwasserstoffe des Kraftstoffs der Wärmekraftmaschine (2, 10) in den bzw. die Reduktionskatalysator(en) (5, 8) eingesetzt werden, **gekennzeichnet durch** die Verwendung eines in einer Brennstoffzelle kontrolliert aus dem Kraftstoff der Wärmekraftmaschine (2, 10) hergestellten Gasgemisches als Reduktionsmittel für den bzw. die Reduktionskatalysator(en) (5, 8).

2. Verfahren nach Anspruch 1, **gekennzeichnet durch** die Verwendung eines in einem katalytischen Reformer und in einer Brennstoffzelle kontrolliert aus dem Kraftstoff der Wärmekraftmaschine (2, 10) hergestellten Gasgemisches als Reduktionsmittel für den bzw. die Reduktionskatalysator(en) (5, 8).

3. Verfahren nach Anspruch 2, **dadurch gekennzeichnet, daß** das in dem katalytischen Reformer (4, 4b) hergestellte Gasgemisch der Brennstoffzelle (9a, 9b) zur weiteren Aufbereitung zugeführt wird.

4. Verfahren nach Anspruch 2, **dadurch gekennzeichnet, daß** ein Teil des im katalytischen Reformer (4a, 4b) hergestellten Gasgemisches der Brennstoffzelle (9a, 9b) zugeführt wird und ein Teil mit in der Brennstoffzelle (9a, 9b) aufbereitetem Gasgemisch gemischt und als Reduktionsmittel eingesetzt wird.

5. Verfahren nach einem der Ansprüche 2 bis 4, **dadurch gekennzeichnet, dass** der Reformer (4a) nach der katalytisch gestützten partiellen Oxidation arbeitet.

6. Verfahren nach nach einem der Ansprüche 2 bis 4, **dadurch gekennzeichnet, dass** der Reformer (4b) als Autothermer Reaktor (ATR) ausgeführt wird.

7. Verfahren nach einem der Ansprüche, **dadurch gekennzeichnet, dass** als Brennstoffzelle (9a) eine Festoxid-Brennstoffzelle (SOFC=Solid Oxide Fuel Cell) eingesetzt wird.

8. Verfahren nach einem der Ansprüche, **dadurch gekennzeichnet, dass** als Brennstoffzelle (9b) eine Schmelzkarbonat-Brennstoffzelle (MCFC=Molten Carbonate Fuel Cell) eingesetzt wird.

9. Verfahren nach Anspruch 7 oder 8, **dadurch gekennzeichnet, dass** der Kraftstoff der Wärmekraftmaschine (2, 10) in der Brennstoffzelle (9a, 9b) direkt umgesetzt wird (sogenannte "Innenreformation" ), und das Anodenabgas als Reduktionsmittel zum Einsatz kommt.

10. Verfahren nach einem der Ansprüche, **dadurch gekennzeichnet, dass** die Umsetzung der Stickoxide in einem edelmetallhältigen Katalysator (8) bei Temperaturen zwischen 90 und 200 °C durchgeführt wird.

11. Verfahren nach einem der Ansprüche, **dadurch gekennzeichnet, dass** die Umsetzung in einem SCR (Selective Catalytic Reduction) Katalysator (5) in einem Temperaturbereich von 350 bis 600 °C durchgeführt wird.

12. Verfahren nach einem der Ansprüche, **dadurch gekennzeichnet, dass** die Umsetzung in zwei seriell hintereinander geschalteten Katalysatoren (5, 8), u.zw. einem SCR-Katalysator (5) und einem Niedertemperatur-Edelmetallkatalysator (8) erfolgt, wobei die Anordnung so gewählt wird, dass jeder Katalysator (5, 8) die für ihn günstigste Rauchgastemperatur vorfindet und jeder unabhängig vom anderen mit dem Reduktionsmittelstrom beaufschlagt wird.

13. Verfahren nach einem der Ansprüche, **dadurch gekennzeichnet, dass** die Wärmekraftmaschine eine Gasturbine (10) im mobilen Einsatz, beispielsweise als Flugzeugtriebwerk, ist und die Eindüsung des Reduktionsmittels in die Turbine (10/3) erfolgt, wobei Turbinenteile, wie Laufschaufeln und/oder Leitschaufeln und/oder Gehäuseinnenteile als katalytische Oberflächen ausgeprägt sind.

14. Verfahren nach einem der Ansprüche, **dadurch gekennzeichnet, dass** die Gasturbine (10) im stationären Einsatz, beispielsweise in einem kalorischen Kraftwerk, ist und die Eindüsung des Reduktionsmittels in die Turbine (10/3) erfolgt, wobei Turbinenteile, wie Laufschaufeln und/oder Leitschaufeln und/oder Gehäuseinnenteile, als katalytische Oberflächen ausgeprägt sind und/oder darüber hinaus die Umsetzung mittels eines SCR-Katalysators im Rauchgasstrom nach der Turbine durchgeführt wird.

15. Verfahren nach einem der Ansprüche, **dadurch gekennzeichnet, dass** die Gasturbine (10) im mobilen Einsatz, als Turbopropmaschine im Flugzeugantrieb ausgeführt ist und die Eindüsung des Reduktionsmittels in die Turbine (10/3) erfolgt, wobei Turbinenteile, wie Laufschaufeln und/oder Leitschaufeln und/oder Gehäuseinnenteile, als katalytische Oberflächen ausgeprägt sind und darüber hinaus die Umsetzung mittels eines SCR-Katalysators (5) im Rauchgasstrom nach der Gasturbine (10) durchgeführt wird.

16. Verfahren nach Anspruch 13, 14 oder 15, **dadurch gekennzeichnet, dass** durch die endotherme Redox-Reaktion eine Kühlwirkung in dem Turbosatz (10/3) erzielt wird.

17. Verfahren nach einem der Ansprüche, **dadurch gekennzeichnet, dass** die elektrische Leistung der Brennstoffzelle (9a oder 9b) genutzt wird, um die Katalysatoren (5, 8) elektrisch zu beheizen.

18. Vorrichtung zur Durchführung des Verfahrens nach Anspruch 1, mit mindestens einem in einer Abgasleitung einer Wärmekraftmaschine (2, 10) vorgesehenen Reduktionskatalysator (5, 8), in den eine Reduktionsmittelzuleitung mündet, **dadurch gekennzeichnet, dass** eine Brennstoffzelle (9a, 9b) vorgesehen ist, in die eine Kraftstoff aus einem Kraftstofftank (1) der Wärmekraftmaschine (2, 10) zuführende Kraftstoffleitung mündet und von welcher Brennstoffzelle (9a, 9b) die Reduktionsmittelzuleitung ausgeht.

19. Vorrichtung nach Anspruch 18, **dadurch gekennzeichnet, dass** ein Reformer (4a, 4b) und eine Brennstoffzelle (9a, 9b) in Serie vorgesehen sind.

20. Vorrichtung nach Anspruch 18 oder 19, **dadurch gekennzeichnet, dass** in der Reduktionsmittelleitung ein Dosierventil (6, 6.1), vorzugsweise ausgebildet als Magnetventil, vorgesehen ist, das über ein Dosierregelsystem, welches mit einem elektronischen Motormanagement (7.2) verknüpft ist, ansteuerbar ist.

21. Vorrichtung nach einem der Ansprüche 18 bis 20, **dadurch gekennzeichnet, dass** zur Sicherstellung der optimalen Betriebstemperatur des Katalysators der Reduktionskatalysator (5, 8), der Reformer (4a, 4b) und/oder die Brennstoffzelle (9a, 9b) über Wärmetauscher oder wärmeleitende Verbindungen oder bauliche Integration in ein Gehäuse thermisch integriert sind.

22. Vorrichtung nach einem der Ansprüche 18 bis 21, **dadurch gekennzeichnet, dass** der Katalysator (5, 8) als Edelmetallkatalysator ausgebildet ist.

23. Vorrichtung nach einem der Ansprüche 18 bis 22, **dadurch gekennzeichnet, dass** ein Hochtemperaturkatalysator und ein Niedertemperaturkatalysator (8) in Serie geschaltet vorgesehen sind und jeder dieser Katalysatoren über ein Dosierventil (6, 6.1) mit dem Reformer (4a, 4b) und/oder der Brennstoffzelle (9a, 9b) leitungsmäßig verbunden ist.

24. Vorrichtung nach einem der Ansprüche 19 bis 23, **dadurch gekennzeichnet, dass** zusätzlich Mischventile (11, 11.1) zur Mischung der Reduktionsmittel aus Reformer und Brennstoffzelle vorgesehen sind.

25. Vorrichtung nach einem der Ansprüche 18 bis 24, **dadurch gekennzeichnet, dass** der Massenstrom des Reduktions-Gasgemisches durch eine elektronische Regeleinrichtung mit einem Magnetventil (6, 6.1) und Steuergerät (7, 7.1) für Pulsbreitensteuerung für jeden Katalysator (5, 8) einzeln zuführbar ist.

26. Vorrichtung nach einem der Ansprüche 18 bis 25, **dadurch gekennzeichnet, dass** dem Reformer (4a, 4b) und/oder der Brennstoffzelle (9a, 9b) zusätzlich ein Entschwefelungssystem (3) vorgeschaltet ist.

27. Vorrichtung nach einem der Ansprüche 18 bis 26, **dadurch gekennzeichnet, dass** die Entschwefelungseinheit (3) seriell vor der Abzweigung des Kraftstoffes für den Reformer (4a, 4b) und/oder die Brennstoffzelle (9a, 9b) angeordnet ist.

28. Vorrichtung nach einem der Ansprüche 19 bis 27, **dadurch gekennzeichnet, dass** der Reformer als nach der katalytisch gestützten partiellen Oxidation arbeitender Reformer (4a) oder als Autothermer Reformer (ATR) (4b) ausgebildet ist.

29. Vorrichtung nach einem der Ansprüche 18 bis 28, **dadurch gekennzeichnet, dass** die Brennstoffzelle eine Festoxid-Brennstoffzelle (SOFC) (9a) oder eine Schmelzkarbonat Brennstoffzelle (MCFC) (9b) ist.

## Claims

1. A process for catalytic NOx reduction in oxygen-containing exhaust gases of a thermal engine (2, 10) in one or more reduction catalysts (5, 8), with hydrocarbons of the fuel of the thermal engine (2, 10) being used in the reduction catalyst(s) (5, 8), **characterized by** using a gas mixture generated in a controlled fashion in a fuel cell from the fuel of the thermal engine (2, 20) as reducing agent for the reduction catalyst(s) (5, 8).

2. A process according to claim 1, **characterized by** using a gas mixture generated in a controlled fashion in a catalytic reformer and in a fuel cell from the fuel of the thermal engine (2, 20) as a reducing agent for the reduction catalyst(s) (5, 8).

3. A process according to claim 2, **characterized by** supplying the gas mixture generated in the catalytic reformer (4, 4b) to the fuel cell (9a, 9b) for further processing.

4. A process according to claim 2, **characterized by** supplying a portion of the gas mixture generated in the catalytic reformer (4a, 4b) to the fuel cell (9a, 9b) and mixing a portion of it with a gas mixture processed in the fuel cell (9a, 9b) and using it as a reducing agent.

5. A process according to one of the claims 2 to 4, **characterized in that** the reformer (4a) is operating based on catalytically supported partial oxidation.

6. A process according to of the claims 2 to 4, **characterized in that** the reformer (4b) is designed as autothermal reactor (ATR).

7. A process according to one of the preceding claims, **characterized in that** a solid oxide fuel cell (SOFC) is used as a fuel cell (9a).

8. A process according to one of the preceding claims, **characterized in that** a molten carbonate fuel cell (MCFC) is used as a fuel cell (9b).

9. A process according to claim 7 or 8, **characterized in that** the fuel of the thermal engine (2, 10) is converted directly in the fuel cell (9a, 9b) (so-called "internal reformation") and the anode exhaust gas being utilized as a reducing agent.

10. A process according to one of the preceding claims, **characterized in that** the reaction of the nitrogen oxides is carried out in a precious metal catalyst (8) at temperatures between 90 and 200 °C.

11. A process according to one of the preceding claims, **characterized in that** the reaction is carried out in an SCR (Selective Catalytic Reduction) catalyst (5) in a temperature range from 350 to 600 °C.

12. A process according to one of the preceding claims, **characterized in that** the reaction is carried out in two serially connected catalysts (5, 8) namely an SCR catalyst (5) and a low temperature precious metal catalyst (8), wherein the arrangement being chosen such that each catalyst (5, 8) will be exposed to its most favorable flue gas temperature and each of them, independent of each other, is loaded with the reducing agent flow.

13. A process according to one of the preceding claims, **characterized in that** the thermal engine comprises a gas turbine (10) in mobile applications, such as an aircraft engine, and wherein the injection of said reducing agent occurs into the turbine (10/3), wherein turbine parts such as rotor blades and/or guide vanes and/or housing internal parts are realized as catalytic surfaces.

14. A process according to one of the preceding claims, **characterized in that** said gas turbine (10) is used in stationary applications, for example in a thermal power plant and said injection of the reducing agent occurs into the turbine (10/3), wherein turbine parts such as rotor blades and/or guide vanes and/or housing internal parts are realized as catalytic surfaces and/or furthermore the reaction is carried out by means of an SCR catalyst in the flue gas stream downstream of the turbine.

15. A process according to one of the preceding claims, **characterized in that** the gas turbine (10) is used in mobile applications as a turboprop engine in the aircraft propulsion and said injection of said reducing agent occurs into the turbine (10/3), wherein turbine parts such as rotor blades and/or guide vanes and/or housing internal parts are realized as catalytic surfaces and/or furthermore the reaction is carried out by means of an SCR catalyst (5) in the flue gas stream downstream of the turbine (10).

16. A process according to claim 13, 14 or 15, **characterized in that** a cooling effect in the turbo set (10/3) is achieved by the endothermic redox reaction.

17. A process according to one of the preceding claims, **characterized in that** the electrical power of the fuel cell (9a or 9b) is utilized for electrically heating said catalysts (5, 8).

18. Device for carrying out the process according to claim 1, having at least one reduction catalyst (5, 8) provided in an exhaust pipe of a thermal engine (2, 10) into which a reduction agent feed line leads, **characterized in that** a fuel cell (9a, 9b) is provided into which a fuel line leads, supplying fuel from a fuel tank (1) of the thermal engine (2, 10) and which fuel cell (9a, 9b) the reducing agent feed line comes from.

19. Device according to claim 18, **characterized in that** a reformer (4a, 4b) and a fuel cell (9a, 9b) are provided in series.

20. Device according to claim 18 or 19, **characterized in that** in the reducing agent line a metering valve (6, 6.1) is provided, preferably designed as a solenoid valve, which is driveable by a metering control system coupled to an electronic engine management (7.2).

21. Device according to one of claims 18 to 20, **characterized in that** the reduction catalyst (5, 8), the reformer (4a, 4b) and/or the fuel cell (9a, 9b) are thermally integrated into a housing via heat exchangers or heat-conductive connections or structural integration in order to ensure the optimum operating temperature of the catalyst.

22. Device according to one of claims 18 to 21, **characterized in that** the catalyst (5, 8) is designed as a precious metal catalyst.

23. Device according to one of claims 18 to 22, **characterized in that** a high-temperature catalyst and a low-temperature catalyst (8) connected in series are provided and each of these catalysts is connected by a line via a metering valve (6, 6.1) to the reformer (4a, 4b) and/or fuel cell (9a, 9b).

24. A device according to one of claims 19 to 23, **characterized in that** additional mixing valves (11, 11.1) for mixing reducing agents from reformer and fuel cell are provided.

25. A device according to one of claims 18 to 24, **characterized in that** the mass flow of the reduction gas mixture may be individually supplied for each catalyst (5, 8) by an electronic control device with a solenoid valve (6, 6.1) and a controller (7, 7.1) for pulse width control.

26. A device according to one of claims 18 to 25, **characterized in that** an additional desulfurizing unit (3) is connected upstream from the reformer (4a, 4b) and/or the fuel cell (9a, 9b).

27. A device according to one of claims 18 to 26, **characterized in that** the desulfurizing unit (3) is arranged serially upstream of the branch of the fuel for the reformer (4a, 4b) and/or the fuel cell (9a, 9b).

28. A device according to one of claims 19 to 27, **characterized in that** the reformer is designed as catalytically supported partial oxidation based reformer (4a) or as an autothermal reformer (ATR) (4b).

29. A device according to one of claims 18 to 28, **characterized in that** the fuel cell is a solid oxide fuel cell (SOFC) (9a) or a molten carbonate fuel cell (MCFC) (9b).

## Revendications

1. Procédé pour la réduction catalytique des NOx dans des gaz d'échappement contenant de l'oxygène d'un moteur thermique (2, 10) dans un ou plusieurs catalyseurs de réduction (5, 8), des hydrocarbures du carburant du moteur thermique (2, 10) étant introduits dans le ou les catalyseur(s) de réduction (5, 8), **caractérisé par** l'utilisation d'un mélange gazeux préparé dans une pile à combustible de manière contrôlée à partir du carburant du moteur thermique (2, 10) en tant que réducteur pour le ou les catalyseur(s) de réduction (5, 8).

2. Procédé selon la revendication 1, **caractérisé par** l'utilisation d'un mélange gazeux préparé dans un reformeur catalytique et dans une pile à combustible de manière contrôlée à partir du carburant du moteur thermique (2, 10) en tant que réducteur pour le ou les catalyseur(s) de réduction (5, 8).

3. Procédé selon la revendication 2, **caractérisé en ce que** le mélange gazeux préparé dans le reformeur catalytique (4a, 4b) est amené à la pile à combustible (9a, 9b) pour traitement ultérieur.

4. Procédé selon la revendication 2, **caractérisé en ce qu'**une partie du mélange gazeux préparé dans le reformeur catalytique (4a, 4b) est amenée à la pile à combustible (9a, 9b) et une partie est mélangée au mélange gazeux traité dans la pile à combustible (9a, 9b) et utilisée comme réducteur.

5. Procédé selon l'une quelconque des revendications 2 à 4, **caractérisé en ce que** le reformeur (4a) fonctionne après l'oxydation partielle à assistance catalytique.

6. Procédé selon l'une quelconque des revendications 2 à 4, **caractérisé en ce que** le reformeur (4b) est réalisé en tant que réacteur autotherme (ATR).

7. Procédé selon l'une quelconque des revendications, **caractérisé en ce qu'**une pile à combustible à oxyde solide (SOFC=Solid Oxide Fuel Cell) est utilisée en tant que pile à combustible (9a).

8. Procédé selon l'une quelconque des revendications, **caractérisé en ce qu'**une pile à combustible à carbonate fondu (MCFC=Molten Carbonate Fuel Cell) est utilisée en tant que pile à combustible (9b).

9. Procédé selon la revendication 7 ou 8, **caractérisé en ce que** le carburant du moteur thermique (2, 10) est directement converti dans la pile à combustible (9a, 9b) (ce qu'on appelle un « reformage interne ») et le gaz d'échappement anodique est utilisé comme réducteur.

10. Procédé selon l'une quelconque des revendications, **caractérisé en ce que** la conversion des oxydes d'azote est effectuée dans un catalyseur contenant des métaux précieux (8) à des températures comprises entre 90 et 200°C.

11. Procédé selon l'une quelconque des revendications, **caractérisé en ce que** la conversion est effectuée dans un catalyseur SCR (Selective Catalytic Reduction) (5) dans une plage de températures de 350 à 600°C.

12. Procédé selon l'une quelconque des revendications, **caractérisé en ce que** la conversion s'effectue dans deux catalyseurs (5, 8) montés en série l'un derrière l'autre, à savoir un catalyseur SCR (5) et un catalyseur à métaux précieux basse température (8), la disposition étant choisie de sorte que chaque catalyseur (5, 8) trouve au préalable la température de gaz de fumée la plus favorable pour lui et chacun est sollicité par le courant de réducteur indépendamment de l'autre.

13. Procédé selon l'une quelconque des revendications, **caractérisé en ce que** le moteur thermique est une turbine gazeuse (10) en utilisation mobile, par exemple en tant que propulseur d'avion, et l'injection du réducteur s'effectue dans la turbine (10/3), des parties de turbine, comme des aubes mobiles et/ou des aubes directrices et/ou des pièces internes de logement sont marquées en tant que surfaces catalytiques.

14. Procédé selon l'une quelconque des revendications, **caractérisé en ce que** la turbine gazeuse (10) est en utilisation stationnaire, par exemple dans usine génératrice calorique, et l'injection du réducteur s'effectue dans la turbine (10/3), des parties de turbine, comme des aubes mobiles et/ou des aubes directrices et/ou des pièces internes de logement sont marquées en tant que surfaces catalytiques et/ou la conversion est en outre effectuée au moyen d'un catalyseur SCR dans le courant de gaz de fumée après la turbine.

15. Procédé selon l'une quelconque des revendications, **caractérisé en ce que** la turbine gazeuse (10) est réalisée en utilisation mobile, en tant que turbopropulseur dans l'entraînement d'avion, et l'injection du réducteur s'effectue dans la turbine (10/3), des parties de turbine, comme des aubes mobiles et/ou des aubes directrices et/ou des pièces internes de logement sont marquées en tant que surfaces catalytiques et la conversion est en outre effectuée au moyen d'un catalyseur SCR (5) dans le courant de gaz de fumée après la turbine gazeuse (10).

16. Procédé selon la revendication 13, 14 ou 15, **caractérisé en ce qu'**un effet de refroidissement est obtenu dans la turbine (10/3) par la réaction redox endothermique.

17. Procédé selon l'une quelconque des revendications, **caractérisé en ce que** la puissance électrique de la pile à combustible (9a ou 9b) est utilisée pour chauffer électriquement les catalyseurs (5, 8).

18. Dispositif pour réaliser le procédé selon la revendication 1, comprenant au moins un catalyseur de réduction (5, 8) prévu dans une conduite de gaz d'échappement d'un moteur thermique (2, 10), catalyseur dans lequel une conduite de réducteur débouche, **caractérisé en ce qu'**il est prévu une pile à combustible (9a, 9b) dans laquelle une conduite de carburant amenant du carburant provenant d'un réservoir de carburant (1) du moteur thermique (2, 10) débouche et de laquelle pile à combustible (9a, 9b) la conduite de réducteur part.

19. Dispositif selon la revendication 18, **caractérisé en ce qu'**un reformeur (4a, 4b) et une pile à combustible (9a, 9b) sont prévus en série.

20. Dispositif selon la revendication 18 ou 19, **caractérisé en ce qu'**une soupape de dosage (6, 6.1), de préférence réalisée en tant qu'électrovanne, est prévue dans la conduite de réducteur, laquelle peut être commandée par le biais d'un système de régulation du dosage qui est relié à une gestion de moteur électronique (7.2).

21. Dispositif selon l'une quelconque des revendications 18 à 20, **caractérisé en ce que** le catalyseur de réduction (5, 8), le reformeur (4a, 4b) et/ou la pile à combustible (9a, 9b) sont intégrés thermiquement dans un logement par le biais d'échangeurs de chaleur ou de connexions thermoconductrices ou d'intégration structurelle en vue de garantir la température de fonctionnement optimale du catalyseur.

22. Dispositif selon l'une quelconque des revendications 18 à 21, **caractérisé en ce que** le catalyseur (5, 8) est réalisé en tant que catalyseur à métaux précieux.

23. Dispositif selon l'une quelconque des revendications 18 à 22, **caractérisé en ce qu'**un catalyseur haute température et un catalyseur basse température (8) sont prévus montés en série et chacun de ces catalyseurs est relié par le biais d'une soupape de dosage (6, 6.1) au reformeur (4a, 4b) et/ou à la pile à combustible (9a, 9b) au moyen de conduites.

24. Dispositif selon l'une quelconque des revendications 19 à 23, **caractérisé en ce que** des soupapes de mélange (11, 11.1) sont prévues en supplément pour mélanger le réducteur provenant du reformeur et de la pile à combustible.

25. Dispositif selon l'une quelconque des revendications 18 à 24, **caractérisé en ce que** le courant massique du mélange gazeux de réduction peut être amené individuellement par un dispositif de régulation électronique comprenant une électrovanne (6, 6.1) et un appareil de commande (7, 7.1) pour la commande d'impulsions en durée pour chaque catalyseur (5, 8).

26. Dispositif selon l'une quelconque des revendications 18 à 25, **caractérisé en ce qu'**un système de désulfuration (3) est en outre monté en amont du reformeur (4a, 4b) et/ou de la pile à combustible (9a, 9b).

27. Dispositif selon l'une quelconque des revendications 18 à 26, **caractérisé en ce que** le module de désulfuration (3) est disposé en série avant la dérivation du carburant pour le reformeur (4a, 4b) et/ou la pile à combustible (9a, 9b).

28. Dispositif selon l'une quelconque des revendications 19 à 27, **caractérisé en ce que** le reformeur est réalisé en tant que reformeur (4a) fonctionnant après l'oxydation partielle à assistance catalytique ou en tant que reformeur autotherme (ATR) (4b).

29. Dispositif selon l'une quelconque des revendications 18 à 28, **caractérisé en ce que** la pile à combustible est une pile à combustible à oxyde solide (SOFC) (9a) ou une pile à combustible à carbonate fondu (MCFC) (9b).
